# EUROPÄISCHE PATENTSCHRIFT

(11) **EP 3 433 078 B1**
(45) Veröffentlichungstag und Bekanntmachung des Hinweises auf die Patenterteilung: **27.07.2022**
(21) Anmeldenummer: 17710877.6
(22) Anmeldetag: 14.03.2017
(51) Int. Cl.: B29C 65/44, B29C 65/46, B29C 65/76, B29C 65/16, B29C 65/18, B29K 101/12, B29K 705/00, B29K 709/02

(54) **VORRICHTUNG UND VERFAHREN ZUR HERSTELLUNG ODER ZUM TRENNEN EINER VERBINDUNG MINDESTENS EINES METALLISCHEN ODER KERAMISCHEN BAUTEILS UND EINES AUS ODER MIT EINEM THERMOPLASTISCHEN POLYMER GEBILDETEN BAUTEILS**
DEVICE AND METHOD FOR PRODUCING OR FOR INTERRUPTING A CONNECTION BETWEEN AT LEAST ONE METAL OR CERAMIC COMPONENT AND A COMPONENT FORMED FROM OR WITH A THERMOPLASTIC POLYMER
DISPOSITIF ET PROCÉDÉ POUR LA RÉALISATION OU LA SÉPARATION D'UNE LIAISON D'AU MOINS UNE PIÈCE MÉTALLIQUE OU CÉRAMIQUE ET D'AU MOINS UNE PIÈCE FORMÉE À PARTIR DE OU CONTENANT UN POLYMÈRE THERMOPLASTIQUE

(30) Priorität: 23.03.2016 DE 102016204797
(43) Veröffentlichungstag der Anmeldung: 30.01.2019
(73) Patentinhaber: Fraunhofer-Gesellschaft zur Förderung der angewandten Forschung e.V., 80686 München (DE); Technische Universität Dresden, 01069 Dresden (DE)
(72) Erfinder: LANGER, Maurice, 01309 Dresden (DE); KLOTZBACH, Annett, 01326 Dresden (DE); PAUTZSCH, Robert, 01187 Dresden (DE)
(74) Vertreter: Pfenning, Meinig & Partner mbB
(86) Internationale Anmeldenummer: PCT/EP2017/055934
(87) Internationale Veröffentlichungsnummer: WO 2017/162473

(56) Entgegenhaltungen:
- EP-A1- 1 036 644
- EP-A1- 2 724 840
- WO-A1-2009/063515
- WO-A1-2014/123022
- WO-A1-2015/040466
- GB-A- 1 427 062
- US-A- 5 198 053
- US-A1- 2011 290 774

## Beschreibung

Die Erfindung betrifft eine Vorrichtung und ein Verfahren zur Herstellung oder zum Trennen einer stoffschlüssigen oder stoff- und formschlüssigen Verbindung mindestens eines metallischen oder keramischen Bauteils und einem aus oder mit einem thermoplastischen Polymer gebildeten Bauteils.

In der Automobilindustrie ist das Widerstandsschweißen, welches zumeist mit Hilfe von robotergeführten Schweißzangen durchgeführt wird, ein gängiges Verfahren um Karosserieteile miteinander zu verbinden. Hierbei werden zwei gegenüberliegende Elektroden punktuell zusammengepresst und ein Stromfluss durch die elektrisch leitfähigen Werkstoffe initiiert, die daraufhin aufgrund der Jouleschen-Stromwärme aufschmelzen, wobei der Druck während und nach dem Stromfluss die stabile Verbindung unterstützt.

Die Schweißnaht entsteht, wenn die aufgeschmolzenen Teile wieder erstarren.

Zunehmend spielen auch die Kombination von Metallen und Thermoplasten bzw. thermoplastischen Verbundwerkstoffen im strukturellen Leichtbau eine zentrale Rolle, denn das geringe Gewicht und die spezifischen hohen Festigkeiten der Verbundwerkstoffe ergänzen sich mit den Eigenschaften der Metalle vorteilhaft. Bisheriges Problem ist es, ein für den industriellen Großeinsatz geeignetes Verfahren zu entwickeln, um diese artungleichen Materialien mit Prozesszeiten << 30s zu fügen, sodass in den darauffolgenden Arbeitsschritten eine sofortige Beanspruchung der Verbindung, z.B. zur Realisierung eines Materialflusses mit Verbindungsfestigkeiten im Bereich geklebter Bauteile oder darüber realisiert werden kann. Der unterschiedliche physikalische Aufbau der Materialien und deren ungleiche Wärmeausdehnungskoeffizienten erfordern dabei spezielle Fügeverfahren.

Ein bisheriger Ansatz Metallteile mit Thermoplasten bzw. thermoplastischen Verbundwerkstoffen im Strukturleichtbau zu verbinden, besteht darin, die Werkstoffe mit einem geeigneten Klebstoff zu fügen. Voraussetzung hierfür ist eine zeit- und kostenintensive Vorbereitung der Klebestellen, die Notwendigkeit zur Verwendung von Zusatzmaterial (Klebstoff) sowie die Einhaltung von Aushärtezeiten, die typischerweise im Bereich von mehreren Minuten bis Stunden liegen.

Ein weiterer Ansatz sind Metall-Thermoplast-Halbzeuge, bei denen metallische Platinen abwechselnd mit einem thermoplastischen oder duromeren Organoblech geschichtet werden und anschließend in einer diskontinuierlichen Fügepresse bei erhöhten Temperaturen und erhöhtem Druck miteinander verbunden werden. Dieses sogenannte Heißpressen wird ebenfalls für bereits vorgeformte Metallteile eingesetzt, bei dem Faserverbundpatches aufgebracht werden.

Für einzelne Bauteile wurde auch das In-Mold Verfahren etabliert, bei dem der Kunststoff direkt in einem Spritzgussprozess an das Metall angespritzt oder ein Metallteil umspritzt wird. Dabei ist man allerdings erheblich in der Flexibilität der Bauteilgeometrie und bei der Werkstoffauswahl eingeschränkt, da der Kunststoff in einer Spritzgussmaschine verarbeitet werden muss.

Mechanische Fügeverfahren, wie Schrauben und Nieten bewirken lokale Querschnittsverminderungen mit gestörtem Kraftfluss bei Faser-Kunststoff-Verbunden (FKV) und verschlechtern somit die Materialeigenschaften wesentlich.

Die genannten Ansätze sind bisher für einen industriellen Einsatz nur bedingt geeignet, da die Kosten und insbesondere die Fertigungszeiten immer noch recht hoch sind. Des Weiteren ist eine einfache Integration des thermischen Direktfügens, das heißt ohne Einsatz von Zusatzmaterial, wie Klebstoff, in den industriellen Fertigungsprozess nur zu realisieren, wenn ein kompaktes und flexibles Werkzeug bzw. eine solche Vorrichtung angeboten werden kann.

So ist aus WO 2009/063515 A1 eine Vorrichtung zur Generierung temperaturgesteuerter magnetischer Induktionspole eines Schweißkopfes bekannt.

US 5 198 053 A betrifft ein Verfahren und eine Vorrichtung zum Fügen von PTFE auf ein Metallsubstrat.

Ein Verfahren zum Verbinden metallischer Elemente mit einem Element aus Harz geht aus WO 2015/040466 A1 hervor.

In EP 1 036 644 A1 sind ein Verfahren und eine Vorrichtung zum Deformieren einer Erhebung aus einem thermoplastischen Kunststoff mit Laserenergie offenbart.

Eine Schweißeinrichtung und eine Verfahren zum Verschweißen von wenigstens zwei Werkstofflagen eines Werkstücks sind in EP 2 724 840 A1 beschrieben.

WO 2014/123022 A1 betrifft eine Vorrichtung und ein Verfahren zum Fügen mittels Laser.

Die Offenbarung von US 2011/0290774 A1 betrifft die Handhabung eines Einsatzes bei der Implantation in ein zellulares Paneel.

Ein thermisches Einfüge- oder Entfernungswerkzeug geht aus GB 1427 062 A hervor.

Es ist daher Aufgabe der Erfindung, Möglichkeiten für eine sichere Verbindung mindestens eines metallischen Bauelements mit einem aus oder mit einem thermoplastischen Polymer gebildeten Bauelement in verkürzter Taktzeit herstellen oder trennen zu können, anzugeben.

Erfindungsgemäß wird diese Aufgabe mit einer Vorrichtung, die die Merkmale des Anspruchs 1 aufweist, gelöst. Ein Herstellungsverfahren ist mit dem Anspruch 7 definiert. Vorteilhafte Ausgestaltungen und Weiterbildungen der Erfindung können mit in untergeordneten Ansprüchen bezeichneten Merkmalen realisiert werden.

Bei der erfindungsgemäßen Vorrichtung zur Herstellung oder zum Trennen einer stoffschlüssigen oder stoff- und formschlüssigen Verbindung mindestens eines metallischen oder keramischen Bauelements und einem aus oder mit einem thermoplastischen Polymer gebildeten Bauelements sind die miteinander zu fügenden Bauelemente mit einer einen Gegenhalter und ein Druckstempel aufweisenden Presseinrichtung zusammenpressbar oder auseinanderziehbar.

Am Druckstempel und/oder dem Gegenhalter ist eine Heizeinrichtung vorhanden. Sie wirkt so, dass zumindest eine partielle Erwärmung des mindestens einen metallischen oder keramischen Bauelements bis oberhalb der Erweichungstemperatur und ggf. auch unterhalb der Zersetzungstemperatur des aus oder mit Polymer gebildeten Bauelements erreichbar ist. Die Zersetzungstemperatur sollte zumindest beim Fügen nicht überschritten werden.

Die Heizeinrichtung ist in Form mindestens einer der drei folgenden Alternativen ausgebildet.
- Die Heizeinrichtung weist elektrische Widerstandsheizelemente auf, das von einer elektrisch isolierenden, bevorzugt keramischen Schutzschicht überdeckt ist.
- Mindestens einen Laserstrahl, der bevorzugt durch ein für die Laserstrahlung transparentes Element, das Bestandteil des Druckstempels und/oder des Gegenhalters ist, ist auf das/die metallische(n) oder keramische(n) Bauelement(e) innerhalb des Fügebereiches gerichtet. Es können aber auch mehrere Laserstrahlen genutzt werden, die von einer Arrayanordnung mehrerer Laserstrahlquellen, die bevorzugt einzeln ansteuerbar sind, auf eine Oberfläche eines metallischen oder keramischen Elements gerichtet werden können.
- Sie weist mindestens einen am Druckstempel und/oder neben dem Gegenhalter vorhandenen Induktor zur induktiven Erwärmung des/der metallischen Bauelemente(s) auf.
gebildet ist.

So soll mittels der Heizeinrichtung eine lokal definierte Erwärmung des/der metallischen oder keramischen Bauelemente(s) im Fügebereich dadurch erreichbar sein; indem mehrere elektrische Widerstandsheizelemente jeweils einzeln ansteuerbar und dabei in Form von punkt-, linien-, rechteck-, ringförmigen und/oder kreisringsegmentförmigen elektrischen Widerstandsheizelementen ausgebildet sind, mit denen jeweils bevorzugt eine Heizrate größer 500 K/s und innerhalb des Fügebereichs eine zumindest nahezu gleichmäßige durch inhomogene Wärmeeinleitung ein zumindest bevorzugt nahezu homogenes Temperaturfeld in der Grenzfläche zwischen den Fügepartnern erreichbar ist.

Dazu kann allein oder zusätzlich jeweils mindestens eine der zwei nachfolgend genannten Möglichkeiten zur Erwärmung des Polymers angewendet werden.

Der mindestens eine Laserstrahl ist in Abhängigkeit einer mit einer ortsaufgelöst erfassenden Temperaturmesseinrichtung so auslenkbar und betreibbar, dass im Fügebereich eine zumindest nahezu homogene Temperatur erreichbar ist. Der Laserstrahl kann aber auch gesteuert betrieben werden, wenn die mit ihm erreichbare lokale Erwärmung innerhalb des Fügebereichs vorab ermittelt worden oder bekannt ist. Die Temperatur kann beispielsweise mit einem Pyrometer oder thermografisch gemessen bzw. ermittelt werden. Es kann auch eine Veränderung an der Oberfläche eines beheizten Bauelements dabei berücksichtigt werden, wie dies beispielsweise bei Auftreten von Anlassfarben der Fall ist. Damit ist auch die Erkennung von Fehlern bei der Durchführung des Verfahrens detektierbar, da beispielsweise zu hohe Temperaturen an einem metallischen oder keramischen Bauelement auftreten können, wenn kein ausreichender berührender Kontakt zur Oberfläche eines mit einem thermoplastischen Polymer gebildeten Bauelements besteht und nicht ausreichend Wärme durch Wärmeleitung an dieses mit einem thermoplastischen Polymer gebildeten Bauelement abgegeben werden kann.

Der mindestens eine Induktor ist so gestaltet, dass er in Bezug zu einem metallischen Bauelement bewegbar und/oder regelbar betreibbar ist, so dass im Fügebereich eine zumindest nahezu homogene Temperatur erreichbar ist. Bei mehreren Induktoren können diese jeweils einzeln gesteuert und/oder geregelt werden.

Die Erfindung kann aber auch zum Trennen von solchen Bauelementen genutzt werden. Dabei erfolgt die Erwärmung des thermoplastischen Polymers im Fügebereich, so wie bei einem stoffschlüssigen oder stoff- und formschlüssigen Fügen bis zu einer geeigneten Temperatur. Mittels an Druckstempel und Gegenhalter vorhandenen Fixier- oder Klemmelementen, die bevorzugt über den äußeren Umfang verteilt an den metallischen oder keramischen Bauelementen angreifen, können bei einer Bewegung von Druckstempel und Gegenhalter, bei der sich beide voneinander entfernen,
Zugkräfte an den metallischen oder keramischen Bauelementen wirken, die zum Trennen einer vorab hergestellten Verbindung führen.

An der Vorrichtung kann auch eine Kühleinrichtung vorhanden sein, die bevorzugt in Druckstempel und/oder Gegenhalter integriert werden kann. Eine Kühleinrichtung kann folgendermaßen gestaltet sein:
- Kühlung des jeweiligen metallischen oder keramischen Bauelements durch erzwungene Konvektion über Gase, die auf Raumtemperatur oder deutlich unter Raumtemperatur abgekühlt sind und auf die Fügepartner als Strömung gerichtet werden.
- Kühlung durch Wärmeleitung über nach dem Erwärmungsprozess aktivierbare Kühlplatten mit flüssigen oder gasförmigen Kühlmedien
- Wärmeableitung über Druckstempel oder Gegenhalter.

Mit einer Kühlung kann die Taktzeit weiter reduziert werden, da der Erstarrungsprozess des thermoplastischen Werkstoffs nach der Erwärmung verkürzt werden kann.

Für die Ausbildung einer auch formschlüssigen Verbindung kann es vorteilhaft sein, dass im mindestens einen metallischen oder keramischen Bauelement innerhalb des Fügebereichs mindestens eine Durchbrechung und/oder eine Vertiefung in die erweichtes oder geschmolzenes Polymer gelangt oder eine Erhebung, die in das erweichte oder geschmolzene Polymer eindringt, vorhanden ist, die für eine formschlüssige Verbindung nutzbar ist/sind. So kann das erweichte und ggf. sogar geschmolzene Polymer durch die Druckkraftwirkung von Druckstempel und Gegenhalter einen entsprechenden Hohlraum ausfüllen und dabei sogar eine oder mehrere Hinterschneidung(en) ausfüllen oder einen nach außen weisenden Rand einer Durchbrechung umgreifen. Eine Erhebung kann in das erweichte Polymer eindringen und sich dort nach dem Erstarren verhaken. Eine oder mehrere Erhebung(en) kann/können dabei auch so in das Polymer eingedrückt werden, dass es zwischen mehrere Fasern bzw. Faserlagen eindringt und so ein noch festerer Verbund zwischen Metall oder Keramik und Faserverbundkomposit erreicht werden kann.

Erfolgt die Erwärmung des mindestens einen metallischen oder keramischen Bauelements innerhalb des Fügebereichs sollte der mindestens eine Laserstrahl in Abhängigkeit der ortsaufgelöst innerhalb des Fügebereichs an dem/den metallischen Bauelement(en) gemessenen oder bekannten Temperaturen in seiner Vorschubbewegungsrichtung, der Vorschubgeschwindigkeit des Brennflecks des Laserstrahls, der Größe der Fläche des Brennflecks, seiner Leistung und/oder der Pulsrate und Pulslänge bei einem gepulsten Betrieb des Laserstrahls regelbar betreibbar sein, so dass eine zumindest nahezu konstante Temperatur im Fügebereich des jeweiligen bestrahlten metallischen oder keramischen Bauelements eingehalten und die Temperatur oberhalb der Erweichungstemperatur und beim Fügen möglichst auch unterhalb der Zersetzungstemperatur des Polymers gehalten werden kann. Bei einer Beeinflussung der Größe der Fläche des Brennflecks kann der Laserstrahl so fokussiert werden, dass die Brennpunktebene oberhalb der Oberfläche des bestrahlten metallischen oder keramischen Bauelements angeordnet ist, da so größere Vorschubbewegungsgeschwindigkeiten realisierbar sind.

Die Erwärmung des/der metallischen oder keramischen Bauelemente(s) kann bei allen Alternativen von Heizeinrichtungen auch durch die wirkenden Druckkräfte, die mit Druckstempel und Gegenhalter aufgebracht werden, beeinflusst werden, da damit die thermische Leitung zwischen den unterschiedlichen Bauteilwerkstoffen beeinflussbar ist.

Ein Aspekt der bei der Erwärmung auch beachtet werden sollte, besteht darin, dass die Temperaturerhöhung so beeinflusst wird, dass eine homogene Temperaturverteilung im Fügebereich durch thermische Leitung auf der Oberfläche eines metallischen oder keramischen Bauelements eingehalten wird, die im Kontakt mit dem polymeren Werkstoff steht. Die eigentlich erwärmte Oberfläche kann Temperaturgradienten über die erwärmte Fläche aufweisen.

Bei der Erwärmung spielen die Eigenschaften des jeweiligen Polymers eine wesentliche Rolle, was insbesondere die durch die Erwärmung erreichbare Viskosität betrifft, mit der ein viskoses Fließverhalten erst möglich ist. Weitere Einflussgrößen sind der Werkstoff, insbesondere die thermische Leitfähigkeit und die Dicke des/der metallischen oder keramischen Bauelemente(s) sowie die Bauteilgeometrie das/die mittels der Heizeinrichtung erwärmt werden. Von besonderer Bedeutung bei der Erwärmung der metallischen Partner ist die durch die Bauteilgeometrie vorhandene anisotrope Wärmeleitung im Fügebereich bei direkter Bestrahlung des rückseitigen Bereiches der Fügefläche. Es ist deshalb ein gesteuerter örtlich angepasster Wärmeeintrag erforderlich um eine homogenes Temperaturfeld im Fügebereich zu erzielen.

Ein aus bzw. mit einem Polymer gebildetes Bauelement kann an zwei gegenüberliegenden Seiten mit jeweils einem metallischen und/oder keramischen Bauelement verbunden werden. Dabei sollte eine Heizeinrichtung an Druckstempel und Gegenhalter vorhanden sein bzw. dort wirken. In diesem Fall kann ein Laserstrahl auch vor dem Auftreffen auf das Metall oder die Keramik in mindestens zwei Teilstrahlen geteilt und mit reflektierenden Elementen die Teilstrahlen auf gegenüberliegende Oberflächen der zwei metallischen Bauelemente gerichtet werden.

Auch die bereits erwähnte Auslenkung eines Laserstrahls kann mittels verschwenkbarer reflektierender Elemente so genannten Scanner- oder Galvospiegeln erreicht werden. Durch die Verschwenkbewegung eines oder mehrerer solcher reflektierender Elemente kann sowohl die Vorschubbewegungsrichtung, wie auch die Vorschubgeschwindigkeit des Brennflecks beeinflusst werden.

Bei der Herstellung einer stoffschlüssigen oder stoff- und formschlüssigen Verbindung mindestens eines metallischen Bauelements und einem aus oder mit einem thermoplastischen Polymer gebildeten Bauelements, werden die miteinander zu fügenden Bauelemente mit einer einen Gegenhalter und ein Druckstempel aufweisenden Presseinrichtung zusammen gepresst. Eine solche Vorrichtung kann prinzipiell dem Aufbau einer an sich bekannten Punktschweißzange ähneln.

Zumindest während des Zusammenpressens erfolgt eine Erwärmung des Polymers mit mindestens einer am Druckstempel und/oder dem Gegenhalter vorhandenen Heizeinrichtung. Die Erwärmung des mindestens einen metallischen oder keramischen Bauelements erfolgt dabei bis oberhalb der Erweichungstemperatur und beim Fügen unterhalb der Zersetzungstemperatur des aus oder mit dem Polymer gebildeten Bauelements.
Nach Abschluss der Erwärmungsphase (Erreichen der Solltemperatur und Haltedauer im Fügebereich) erfolgt die Abkühlung, so dass das Polymer erstarrt und sich ein Form- oder/und Stoffschluss zwischen thermoplastischen Polymer und Metall bzw. Keramik ausbildet Mit Unterschreitung der Konsolidierungstemperatur wird das Zusammenpressen und damit der eigentliche Fügeprozess beendet.

Die mit mindestens einem elektrischen Widerstandsheizelement, das von einer elektrisch isolierenden, bevorzugt keramischen Schutzschicht überdeckt ist, ausgebildete Heizeinrichtung kann dabei in einer Alternative gesteuert oder geregelt betrieben werden, wenn einmal das Erwärmungsverhalten bekannt und bevorzugt vorab ermittelt worden ist oder bei der Erwärmung eine ortsaufgelöste Erfassung der Temperatur innerhalb des Fügebereichs durchgeführt wird.

In einer weiteren Alternative, bei der die Erwärmung innerhalb des Fügebereichs mit mindestens einem zweidimensional auslenkbaren Laserstrahl, der bevorzugt durch ein für die Laserstrahlung transparentes Element, das Bestandteil des Druckstempels und/oder des Gegenhalters ist, auf das/die metallische oder keramische Bauelement(e) gerichtet ist, kann eine Beeinflussung der Auslenkbewegung des Laserstrahls, seiner Strahlformung und/oder der Energie die lokal definiert innerhalb des Fügebereiches in den Werkstoff des metallischen Bauelements einkoppelbar ist, in geregelter oder gesteuerter Form erfolgen.

Bei einer dritten Alternative wird mit mindestens einem am Druckstempel und/oder dem Gegenhalter vorhanden Induktor, der zur induktiven Erwärmung des/der metallischen Bauelemente(s) ausgebildet ist, die erforderliche Erwärmung durchgeführt und dabei eine Regelung oder Steuerung vorgenommen, mit der eine lokal definierte Erwärmung innerhalb des Fügebereichs erreicht wird.

Durch Wärmeleitung erfolgt im Kontaktbereich ein gezieltes Erweichen (Plastifizieren) bis hin zum Schmelzen des thermoplastischen Werkstoffs bzw. der thermoplastischen Werkstoffmatrix eines bevorzugt vorkonsolidiertem Faserverbund-Halbzeuges (sog. Organobleche). Durch das Aufbringen eines Fügedrucks fliest das erweichte (plastifizierte) oder sogar das geschmolzene Polymermaterial und kann für die Ausbildung einer stoff- und ggf. zusätzlich formschlüssigen Verbindung in die ggf. zuvor ausgebildete Strukturen (Durchbrechungen, Vertiefungen) ggf. mit Hinterschnittgeometrie, die in einem metallischen Bauelement innerhalb eines Fügebereichs ausgebildet sind, gelangen und erstarrt dort, so dass das Polymer stoffschlüssig an eine bevorzugt haftvermittelnde Schicht anbinden kann, die an der Oberfläche eines metallischen oder keramischen Bauelements ausgebildet sein kann.

Die erreichbaren Prozesstaktzeiten lassen sich so auf nur wenige Sekunden ohne die Verwendung zusätzlicher Verbindungselemente verkürzen, was gegenüber konventionellen Verfahrenslösungen, wie dem Kleben bzw. aufkleben zusätzlicher Verbindungselemente einen entscheidenden Vorteil darstellt.

Um das thermische Direktfügen auf der Basis von Wärmeleitung im industriellen Großeinsatz wirtschaftlich zu ermöglichen, kann mit den folgenden Lösungswegen vorgegangen werden:
1. Ein hochdynamischer Keramikheizer, der ein oder auch mehrschichtig ausgebildet sein kann, oder eine laserinduzierte Erwärmung metallischer Fügepartner bzw. ein induktiv angeregter Bereich als Wärmequelle für das Verfahren genutzt werden.
2. Ein hochdynamischer Keramikheizer mit mindestens einem elektrischen Widerstandsheizelement sollte so gestaltet sein, dass eine inhomogene Erwärmung zur Erreichung eines homogenen Temperaturfeldes im Fügebereich mittels sehr guter Wärmeleitung erreicht und ein Kurzschluss bei Kontakt und Erwärmung eines elektrisch leitfähigen Fügepartners verhindert werden können.
3. Ein Keramikheizer bzw. ein lasertransparentes Element/Medium oder die Spule(n) eines Induktors, der/das in/an einem Werkzeug verbaut ist, können mit einem gezielten Fügedruck im gewünschten Fügebereich zusammen gepresst werden.
4. Der Bereich eines Druckstempels bzw. eines Gegenhalters, der Kontakt mit dem jeweiligen Fügepartner hat, sollte so ausgelegt sein, dass die zu fügenden Oberflächenkonturen abgebildet werden, also dementsprechend komplementär konturiert sein.
5. Die Vorrichtung oder ein Teil der Vorrichtung, der mit den zu fügenden Bauelementen in Kontakt kommt, kann so ausgelegt werden, dass ein Einsatz sowohl händisch, als auch mit einem Roboter oder Linearantriebssystem realisiert werden kann.
6. Der Einsatz von vorhergehenden haftungsverbessernden Verfahren (z.B. Haftvermittler, Sandstrahlen, Laserstrukturierung etc.) im Fügebereich der beiden Materialien kann vor dem Fügen durchgeführt werden.
7. In/an der Vorrichtung können Elemente zur gezielten Abkühlung der Fügepartner integriert oder vorhanden sein, die entweder auf Basis erzwungener Konvektion über Gase oder gezielter Wärmeleitung durch aktivierbare Kühlplatten oder Wärmeabfuhr über Druckstempel und Vorrichtung eine Kühlwirkung des thermoplastischen Polymers hervorrufen.

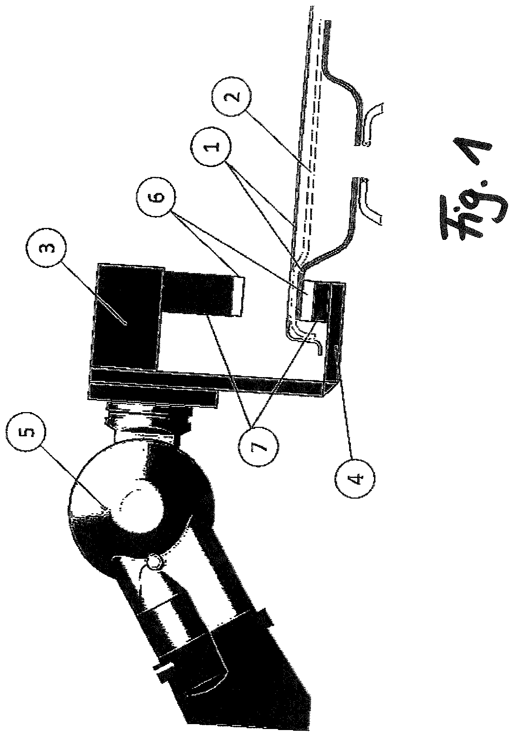

Bei der Erfindung handelt es sich um eine Vorrichtung zum Fügen von Metallen mit Thermoplasten bzw. thermoplastischen Verbundwerkstoffen auf der Basis des thermischen Direktfügens durch Wärmeleitung. Den prinzipiellen Aufbau eines Beispiels einer solchen Vorrichtung kann man Figur 1 entnehmen. Dabei ist eine hochdynamische Heizeinrichtung mit keramischer Deckschicht, alternativ auch kombiniert oder einzeln mit Einsatz von Laserstrahlung oder mindestens eines Induktors möglich. Ein Wärmeeintrag innerhalb des Fügebereichs an metallischen oder keramischen Bauelementen kann ein oder beidseitig erreicht werden. Dabei kann eine Erwärmung an einer Seite an einem metallischen oder keramischen Bauelement und einem anderen metallischen oder keramischen Bauelement zwischen denen ein Bauelement, das mit aus oder mit einem thermoplastischen Werkstoff gebildet ist, erfolgen. Die Erwärmung kann an beiden Seiten mit einer gleichen Heizeinrichtung oder an einer Seite mit einer Heizeinrichtung und an der gegenüberliegenden Seite mit einer anderen Heizeinrichtung, die ausgewählt sind aus elektrischem Widerstandsheizelement(en) (vorzugsweise hochdynamischen Keramikheizern), Laserstrahl und/oder Induktor, vorgenommen werden.

Um einen elektrischen Kurzschluss zwischen der hochdynamischen Keramikheizerschicht mindestens eines elektrischen Widerstandsheizelements und einer elektrisch leitfähigen Bauteiloberfläche zu verhindern, sollten sehr gut wärmeleitfähige Beschichtungen mit elektrisch isolierenden Eigenschaften aus einem bevorzugt keramischen Werkstoff auf den elektrischen Widerstandsheizelement(en) aufgebracht sein, die ähnliche Wärmeausdehnungskoeffizienten aufweisen. Für eine solche Beschichtung können z.B. aushärtende Wärmeleitpasten, Siliciumdioxidschichten oder Schichten aus hexagonalem Bornitrid eingesetzt werden.

Im Falle des thermisch induzierten Erwärmens über Laserstrahlung können das Aufbringen des Fügedrucks und das Einkoppeln der Laserstrahlung mittels eines lasertransparenten Elements/Mediums, das am Druckstempel oder Gegenhalter angeordnet ist, und das mit einer Oberfläche eines metallischen Bauelementes in berührenden Kontakt gebracht worden ist, erreicht werden. Dabei kann die Presskraftwirkung und die Laserstrahlbeaufschlagung innerhalb des Fügebereichs direkt mit dem lasertransparenten Element/Medium und die Laserstrahlung durch dieses hindurch auf eine Oberfläche eines metallischen oder keramischen Bauelements im Fügebereich gerichtet werden. Dabei kann das metallische oder keramische Bauelement direkt erwärmt und der thermoplastische polymere Werkstoff kann auf der Rückseite durch die auftretende Wärmeleitung erwärmt und so ein Plastifizieren des thermoplastischen Werkstoffs erreicht werden. Das laserbasierte Einbringen von Wärme in die metallische(n) oder keramische(n) Bauteiloberfläche(n) bietet gegenüber der konventionellen Erwärmung gegenüber Heizelementen, die Möglichkeit eines örtlich lokal begrenzten und wenn benötigt auch graduierten Temperaturverlauf mit integrierter Pyrometerregelung und hoher geometrischer Flexibilität. Mittels elektrischer Induktion lassen sich beliebige Anordnungen von Metall und Thermoplast realisieren, ohne dass eine optische Zugänglichkeit erforderlich ist.

Mit der Erfindung können folgende Vorteile erreicht werden:
- Flexibler Einsatz der Vorrichtung ohne Geometrielimitation der miteinander zu fügenden oder zu trennender Bauelemente durch den Einsatz von insbesondere geometrisch und entsprechend konturierten angepassten Druckstempeln und Gegenhaltern
- Extrem kurze Prozesszeiten durch hochdynamische Erwärmung und Abkühlung (z.B. hochdynamische Keramikheizer mit 7000 K/s sowie sehr hohen Temperaturgradienten von bis zu 350 K/mm), während konventionelle keramische Heizplatten z.B. aus Silizium- oder Aluminiumnitrid mit Heizraten << 200K/s ein deutlich trägeres Verhalten aufweisen
- Breite Auswahl an zu fügenden oder voneinander zu trennenden Werkstoffen, da nur ein Anschmelzen, mit ausreichender Erweichung oberhalb der Glasübergangstemperatur (T_{G}) des thermoplastischen Polymers bzw. der thermoplastischen Matrix erforderlich ist
- Einsatz sowohl zum Vorfixieren, wie auch zum vollständigen Fügen von Bauteilen ist möglich
- Bei entsprechender Steifigkeit der zu fügenden Bauelemente ist die Zugänglichkeit von nur einer Seite zur Herstellung einer einfachen Überlappverbindung ausreichend
- Bei geeigneter Oberflächenvorbehandlung kann eine Anbindung eines metallischen oder keramischen Bauelements bis in die Faserstruktur eines thermoplastischen Verbundwerkstoffs realisiert und somit höhere Verbindungsfestigkeiten als beim Kleben erzielt werden, da beim Kleben lediglich eine Haftung an der Grenzschicht erfolgt
- Definierte inhomogene Erwärmung um eine homogene Temperaturverteilung innerhalb des Fügebereichs zu erreichen (integrierte hochdynamische Temperaturerfassung und -regelung sind möglich).
- Keramische elektrische Widerstandsheizelemente können angepasst auf den Einsatzzweck hergestellt und ausgetauscht werden
Nachfolgend soll die Erfindung beispielhaft näher erläutert werden.

Dabei zeigen:
Figur 1 in schematischer Form ein Beispiel einer erfindungsgemäßen Vorrichtung;
Figur 2 eine Ansicht auf eine Heizeinrichtung mit geometrisch verschiedenen elektrischen Widerstandsheizelementen;

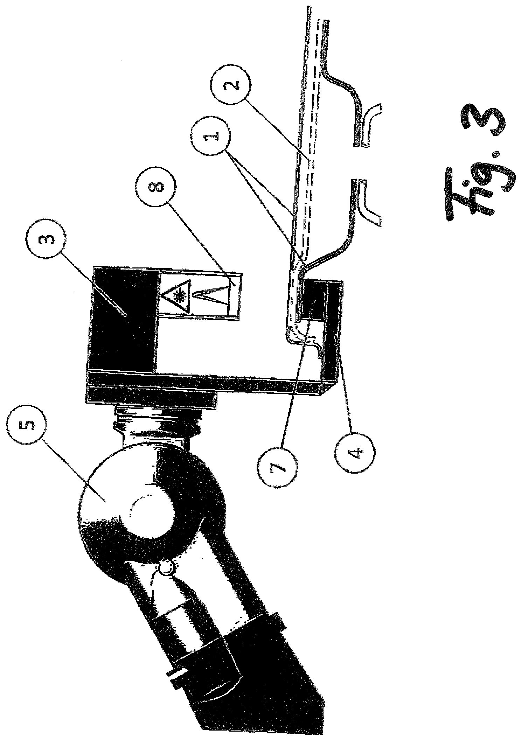

Figur 3 eine Vorrichtung bei der eine Erwärmung mittels eines Laserstrahls erreichbar ist und
Figur 4 eine schematische Darstellung des Fügeprozesses

In Figur 1 ist ein Beispiel einer Vorrichtung gezeigt, bei der zwei metallische Bauelemente 1 mit einem Bauelement 2 aus einem Faserverbundkomposit miteinander in einem Fügebereich an zwei gegenüberliegenden Oberflächen miteinander verbunden werden sollen. Das Faserverbundkomposit besteht beispielsweise aus in einer thermoplastischen Matrix eingebettetem Glasfasergewebe.

An der Vorrichtung sind ein Druckstempel 3 und ein Gegenhalter 4 vorhanden, die mittels eines translatorisch wirkenden Antriebs aufeinander zu bewegbar sind. Zwischen dem Druckstempel 3 und dem Gegenhalter 4 können die Bauelemente 1 und 2 positioniert werden. Dazu kann die Vorrichtung mittels eines Industrieroboters 5 entsprechend positioniert und ausgerichtet werden.

Dabei kann jeweils eine Heizeinrichtung 6 am Druckstempel 3 und einem Gegenhalter 4, die mit den metallischen Bauelementen 1 in berührenden Kontakt gebracht werden, angebracht oder darin integriert sein.

Beim Aufeinander zu bewegen von Druckstempel 3 und Gegenhalter 4 wirken Druckkräfte, die die Bauelemente 1 und 2 zusammenpressen. Vor dem Berühren oder gleichzeitig mit dem Berühren der Bauelemente 1 und 2 von Druckstempel 3 und Gegenhalter 4 wird die Heizeinrichtung 6 aktiviert und es erfolgt eine Erwärmung der metallischen Bauelemente 1 bis oberhalb der Erweichungs- bzw. Plastifizierungstemperatur des thermoplastischen Polymers innerhalb des Fügebereichs. Die Erwärmung kann bis zum Erreichen oder Überschreiten der Schmelztemperatur des Polymers erfolgen. Es darf aber keine Zersetzung auftreten.

Das Polymer des Bauelements 2 wird allein durch thermische Leitung von den metallischen Bauelementen 1 ausreichend erwärmt und kann so plastisch verformt werden, wobei die Verformung nach Abkühlung und Erstarren des Polymers beibehalten wird. Zur schnelleren Abkühlung kann mindestens ein Kühlelement (7) in der Vorrichtung integriert oder daran vorhanden sein. Es kann auch ein Kühlmedium in den Fügebereich gerichtet werden. Dies kann ein gekühltes Fluid sein, das als Strömung auf den Fügebereich gerichtet werden kann.

Nach dem ausreichenden Abkühlen und Erstarren können Druckstempel 3 und Gegenhalter 4 auseinander bewegt werden.

Druckstempel 3 und Gegenhalter 4 können mit vorgebbarem Fügedruck im Bereich von 0,1 MPa bis 20 MPa gegeneinander wirken und die Bauelemente 1 und 2 im Fügebereich zusammenpressen.

Mittels eines Kraft- und/oder Wegsensors kann/können die Druckkraftwirkung und/oder die Heizeinrichtung beeinflusst werden. So kann eine Wegbegrenzung bei der Aufeinanderzubewegung von Druckstempel 3 und Gegenhalter 4 erfolgen, die die Bewegung nach Erreichen eines vorgebbaren Weges beendet. Es kann aber auch die Heizeinrichtung 6 eingeschaltet werden, wenn ein bestimmter Weg zurück gelegt worden ist, bei dem sich Druckstempel 3 und Gegenhalter 4 den Bauelementoberflächen auf einen vorgebbaren Wert genähert haben oder die Bauelemente 1 und 2 in berührenden Kontakt kommen. Ein Abschalten der Heizeinrichtung 6 kann nach Erkennung eines zurück gelegten Weges von Druckstempel 3 und/oder Gegenhalter 4 oder bei Unterschreitung einer vorgebbaren Druckkraft, die zwischen Druckstempel 3 und Gegenhalter 4 wirkt, erfolgen, was mit einem Kraftmesssensor bestimmt werden kann.

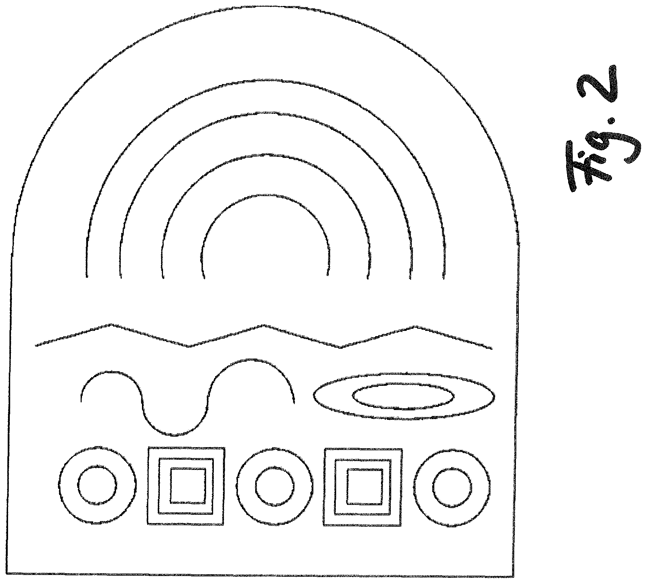

Als Heizeinrichtung 6 kann an Druckstempel 3 und/oder Gegenhalter 4 eine elektrische Widerstandsheizung mit mehreren elektrischen Widerstandsheizelementen gebildet sein, wie sie in mehreren unterschiedlichen Beispielen dafür in Figur 2 gezeigt sind. Bei diesem Beispiel einer Heizeinrichtung 6 sind mehrere elektrische Widerstandsheizelemente als geschlossene Rechtecckonturen mit unterschiedlichen Größen vorhanden. Zusätzlich können kreisringförmige elektrische Widerstandsheizelemente vorhanden sein, die variierende Durchmesser aufweisen. Elektrische Widerstandsheizelemente können aber auch ellipsenförmig, linienförmig ggf. mit wechselnder Richtung, mäanderförmig oder wellenförmig ausgebildet sein.

Nebeneinander angeordnete elektrische Widerstandsheizelemente können auch elektrisch leitend miteinander verbunden sein. Jedes der elektrischen Widerstandsheizelemente ist einzeln ansteuerbar und kann temperaturabhängig geregelt werden. Dazu können Temperatursensoren (z.B. Thermoelemente) in die Heizeinrichtung 6 integriert sein, um eine ortsaufgelöste Temperaturbestimmung im Fügebereich zu ermöglichen. Mit den elektrischen Widerstandsheizelementen kann eine Heizrate von mehr als 1000 K/s erreicht werden.

Die elektrischen Widerstandsheizelemente sind mit einer dünnen keramischen elektrisch nicht leitenden Schicht, wie im allgemeinen Teil der Beschreibung erläutert, überdeckt.

Ist ein Druckstempel 3 oder ein Gegenhalter 4 nicht mit einer Heizeinrichtung 6 versehen oder, wie nachfolgend noch erläutert mit einer Heizeinrichtung 6 mit mindestens einem Induktor versehen, sollte dessen Oberfläche ebenfalls mit einer Antihaftbeschichtung versehen sein, die ein Anhaften von Polymer vermeiden kann.

Eine Heizeinrichtung 6 kann aber auch mit mindestens einem Induktor gebildet sein, der an einem Druckstempel 3 und/oder einem Gegenhalter 4 angebracht sein kann. Mindestens ein Induktor kann auch in einem Druckstempel 3 und/oder einem Gegenhalter 4 integriert sein. Der/die Induktor(en) sollte(n) so dimensioniert und ausgebildet sein, dass eine gleichmäßige Temperatur innerhalb des Fügebereichs eingehalten werden kann. Mehrere Induktoren können dazu einzeln geregelt betrieben oder einzeln ein- und ausgeschaltet werden. So können im Inneren des Fügebereichs wirkende Induktoren vor im Außenbereich des Fügebereichs wirkenden Induktoren ein- oder ausgeschaltet werden, um die Trägheit der Wärmeleitung zu berücksichtigen.

Wird eine Temperaturerhöhung innerhalb des Fügebereichs mit mindestens einem Laserstrahl an einem Druckstempel 3 und/oder einem Gegenhalter 4 erreicht, soll der Laserstrahl im Fügebereich durch ein für die Laserstrahlung transparentes Element 8, das Bestandteil des Druckstempels 3 und/oder des Gegenhalters 4 ist, auf das/die metallische Bauelement(e) 1 innerhalb des Fügebereiches gerichtet werden. Ein für die Laserstrahlung transparentes Element 8 kann aus einem Glas mit geringer Absorption für die Laserstrahlung gebildet sein.

Der Brennfleck des Laserstrahls kann so über den Fügebereich bewegt werden, dass innerhalb des Fügebereichs eine konstante Temperatur eingehalten werden kann. Die Vorschubbewegung kann dabei so erfolgen, dass entsprechende Abstände zwischen den einzelnen Spuren eingehalten werden. Der Brennfleck sollte möglichst innerhalb des Fügebereichs in einem Abstand zu dessen äußeren Rändern bewegt werden.

Es kann auch ein gepulster Betrieb des Laserstrahls ausgenutzt werden.

Die Vorschubgeschwindigkeit mit der der Brennfleck bewegt wird, kann im Zentrum des Fügebereichs genauso größer sein als seine Fläche, wie sie in äußeren Randbereichen des Fügebereichs gewählt werden sollte. Im äußeren Randbereich des Fügebereichs kann also mit kleinerer Vorschubgeschwindigkeit und/oder mit größerem Brennfleck gearbeitet werden.

Selbstverständlich kann die Leistung der Laserstrahlungsquelle ebenfalls geregelt werden.

Die vorab genannten Laserbearbeitungsparameter können jeweils einzeln aber auch zwei oder mehr dieser Parameter gemeinsam geregelt werden. Die Regelung kann mit einer ortsaufgelösten Temperaturmessung innerhalb des Fügebereichs an der Oberfläche eines metallischen Bauelements 1, bevorzugt mit einem Pyrometer oder thermografischer Temperaturbestimmung erfolgen. Im äußeren Randbereich kann auch die nutzbare Pulslänge eines gepulst betriebenen Laserstrahls als im Zentrum des Fügebereichs gearbeitet werden.

Der Brennfleck des Laserstrahls kann mit einer Vorschubgeschwindigkeit im Bereich von 0,02 m/s bis 30 m/s bewegt, mit einer Leistung im Bereich 100 W bis 5000 W, mit einer Pulslänge im Bereich 1 ms bis kontinuierlich strahlend und Pulsabständen im Bereich von 0 bis 10 ms betrieben, werden. Der Laserstrahl kann so fokussiert auf die Oberfläche eines metallischen Bauelements 1 gerichtet werden, dass eine Brennfleckfläche im Bereich von 1 mm² bis 200 mm² und eine Intensität im Bereich von 5^{∗}10² W/cm²bis 5^{∗}10⁶ W/cm²erreicht ist.

Werden mehrere Laserstrahlen von mehreren Laserstrahlquellen auf die Oberfläche eines Bauelements 1 innerhalb des Fügebereichs gerichtet, kann jeder einzelne Laserstrahl entsprechend geregelt oder gesteuert betrieben werden. Es kann in diesem Fall auf eine Beeinflussung der Vorschubgeschwindigkeit verzichtet werden und dies durch ein entsprechendes Ein- und Ausschalten bzw. ein Betrieb mit sich verändernder Leistung der einzelnen Laserstrahlquellen kompensiert werden, indem lokal sich verändernd differenziert innerhalb des Fügebereichs erwärmt wird.

Bei allen drei möglichen Alternativen zur Erwärmung kann das Zusammenpressen der Bauelemente 1 und 2 mit einer maximalen Fügedruck im Bereich von 0,1 MPa bis 20 MPa erfolgen, wobei sich die jeweilige maximale Drucckraft nach der Erweichungs- bzw. Übergangstemperatur T_{G} des eingesetzten thermoplastischen Polymers und/oder dessen Fließverhalten richten sollte.

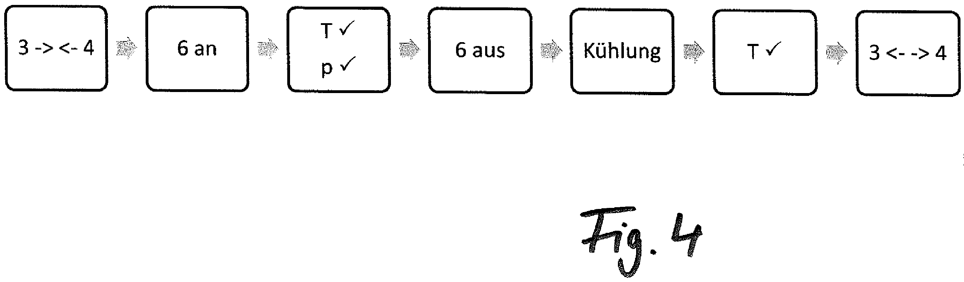

In Figur 4 ist schematisch ein möglicher Ablauf bei der Durchführung des Verfahrens dargestellt. Dabei werden in einem ersten Schritt Druckstempel 3 und Gegenhalter 4 aufeinander zu bewegt.

Dann wird die Heizeinrichtung 6 aktiviert um mindestens ein Bauelement 1 und/oder 2 zu erwärmen. Spätestens bei der Berührung des Druckstempels 3 und/oder Gegenhalters 4 mit einem der Bauelemente 1 und/oder 2 kann die Temperatur T und/oder die Druckkraft p an dem/den Bauelementen 1 und/oder 2 bestimmt werden. Wird das Erreichen mindestens eins vorgebbaren Schwellwerts für die Temperatur T und/oder die Druckkraft p erfasst, wird die Heizeinrichtung 6 ausgeschaltet und es erfolgt eine Kühlung bis auf eine Temperatur bei der das Polymer erstarrt ist. Nach dem Erkennen dieser Temperatur können Druckstempel 3 und Gegenhalter 4 voneinander weg bewegt und das gefügte Werkstück oder einzelne getrennte Teile davon können entnommen werden.

Bei einem Trennen können die einzelnen Teile von Klemm- oder Fixierelementen, die am Druckstempel 3 und Gegenhalter 4 vorhanden sind, gelöst werden.

## Patentansprüche

1. Vorrichtung zur Herstellung einer stoffschlüssigen oder stoff- und formschlüssigen oder zum Trennen einer solchen Verbindung mindestens eines metallischen oder keramischen Bauelements (1) und einem aus oder mit einem thermoplastischen Polymer gebildeten Bauelements (2), bei der die miteinander zu fügenden Bauelemente (1 und 2) mit einer einen Gegenhalter (4) und ein Druckstempel (3) aufweisenden Presseinrichtung zusammenpressbar sind und
am Druckstempel (3) und/oder dem Gegenhalter (4) eine Heizeinrichtung (6) vorhanden ist oder dort wirkt, mit der eine Erwärmung des mindestens einen metallischen oder keramischen Bauelements (1) bis oberhalb der Erweichungstemperatur des aus oder mit Polymer gebildeten Bauelements (2) erreichbar ist; wobei
die Heizeinrichtung (6) mit elektrischen Widerstandsheizelementen, die von einer elektrisch isolierenden, Schutzschicht überdeckt sind,
und/oder
mit mindestens einem Laserstrahl, der auf das/die metallische Bauelement(e) (1) innerhalb des Fügebereiches gerichtet ist, und/oder
mit mindestens einem am Druckstempel (3) und/oder dem Gegenhalter (4) vorhanden Induktor zur induktiven Erwärmung eines des/der metallischen Bauelementes (1, 2)
gebildet ist,
**dadurch gekennzeichnet, dass** mit der Heizeinrichtung (6) eine lokal definierte Erwärmung des/der metallischen oder keramischen Bauelemente(s) (1) im Fügebereich dadurch erreichbar ist; indem mehrere elektrische Widerstandsheizelemente jeweils einzeln ansteuerbar und dabei in Form von punkt-, linien-, rechteck- und/oder kreisringsegmentförmigen elektrischen Widerstandsheizelementen ausgebildet sind und
innerhalb des Fügebereichs ein zumindest nahezu homogenes Temperaturfeld erreichbar ist,
und/oder
der mindestens eine Laserstrahl in Abhängigkeit einer mit einer ortsaufgelöst erfassenden Temperaturmesseinrichtung so auslenkbar und/oder betreibbar ist, dass im Fügebereich ein zumindest nahezu homogenes Temperaturfeld erreichbar ist, und/oder der mindestens eine Induktor so gestaltet, in Bezug zum metallischen Bauelement (1) bewegbar oder regelbar betreibbar ist, so dass im Fügebereich ein zumindest nahezu homogenes Temperaturfeld erreichbar ist.

2. Vorrichtung nach Anspruch 1, **dadurch gekennzeichnet, dass** zum Trennen der stoffschlüssigen oder stoff- und formschlüssigen Verbindung am Druckstempel (3) und Gegenhalter (4) Fixier- oder Klemmelemente, die an metallischen oder keramischen Bauelementen (1) angreifen, vorhanden sind, mit denen bei einer Auseinanderbewegung des Druckstempels (3) und des Gegenhalters (4) Zugkräfte auf die metallischen oder keramischen Bauelemente (1) wirken.

3. Vorrichtung nach einem der vorhergehenden Ansprüche, **dadurch gekennzeichnet, dass** in einem metallischen oder keramischen Bauelement (1) innerhalb des Fügebereichs mindestens eine Durchbrechung und/oder eine Vertiefung in die erweichtes oder geschmolzenes Polymer gelangt oder eine Erhebung, die in das erweichte oder geschmolzene Polymer eindringt, vorhanden ist, die für eine formschlüssige Verbindung nutzbar ist/sind.

4. Vorrichtung nach einem der vorhergehenden Ansprüche, **dadurch gekennzeichnet, dass** der mindestens eine Laserstrahl in Abhängigkeit der ortsaufgelöst innerhalb des Fügebereichs an dem/den metallischen Bauelement(en) (1) gemessenen oder bekannten Temperaturen in seiner Vorschubbewegungsrichtung, der Vorschubgeschwindigkeit des Brennflecks des Laserstrahls, der Größe der Fläche des Brennflecks, seiner Leistung und/oder der Pulsrate und Pulslänge bei einem gepulsten Betrieb des Laserstrahls regelbar betreibbar ist, so dass ein zumindest nahezu konstantes Temperaturfeld des jeweiligen bestrahlten metallischen Bauelements (1) im Fügebereich eingehalten und die Temperatur oberhalb der Erweichungstemperatur und unterhalb der Zersetzungstemperatur des Polymers gehalten ist.

5. Vorrichtung nach einem der vorhergehenden Ansprüche, **dadurch gekennzeichnet, dass** mindestens ein Sensor, der bevorzugt zur ortsaufgelösten Bestimmung von Temperaturen innerhalb des Fügebereichs ausgebildet ist, vorhanden ist.

6. Vorrichtung nach einem der vorhergehenden Ansprüche, **dadurch gekennzeichnet, dass** Widerstandsheizelemente von einer keramischen Schutzschicht überdeckt sind.

7. Verfahren zur Herstellung oder dem Trennen einer stoffschlüssigen oder stoff- und formschlüssigen Verbindung mindestens eines metallischen oder keramischen Bauelements (1) und einem aus oder mit einem thermoplastischen Polymer gebildeten Bauelements (2), unter Verwendung einer Vorrichtung nach einem der vorhergehenden Ansprüche, dabei werden die Bauelemente (1 und 2) mit einer einen Gegenhalter (4) und ein Druckstempel (3) aufweisenden Presseinrichtung zusammen gepresst, dabei erfolgt zumindest während des Zusammenpressens eine Erwärmung des Polymers mit mindestens einer am Druckstempel (3) und/oder dem Gegenhalter (4) vorhandenen Heizeinrichtung (6), des mindestens einen metallischen oder keramischen Bauelements (1) dabei bis oberhalb der Erweichungstemperatur und unterhalb der Zersetzungstemperatur des aus oder mit Polymer gebildeten Bauelements (2) innerhalb eines Fügebereichs, wobei die mit elektrischen Widerstandsheizelementen, die von einer elektrisch isolierenden Schutzschicht überdeckt sind, ausgebildete Heizeinrichtung (6) gesteuert oder geregelt betrieben wird, wenn einmal das Erwärmungsverhalten bekannt und bevorzugt vorab ermittelt worden ist oder bei der Erwärmung eine ortsaufgelöste Erfassung der Temperatur innerhalb des Fügebereichs durchgeführt wird und/oder
in einer weiteren Alternative, bei der die Erwärmung innerhalb des Fügebereichs mit mindestens einem Laserstrahl, der auf das/die metallische(n) oder keramische(n) Bauelement(e) (1) durch eine Beeinflussung der Auslenkbewegung des Laserstrahls, seiner Strahlformung und/oder der Energie die lokal definiert innerhalb des Fügebereiches in den Werkstoff des metallischen Bauelements einkoppelbar ist, in geregelter oder gesteuerter Form durchgeführt wird
und/oder
bei einer dritten Alternative mit mindestens einem am Druckstempel (3) und/oder dem Gegenhalter (4) vorhanden Induktor, der zur induktiven Erwärmung des/der metallischen Bauelemente(s) (1) ausgebildet ist, die erforderliche Erwärmung durchgeführt wird und dabei eine Regelung oder Steuerung vorgenommen wird, mit der eine lokal definierte Erwärmung innerhalb des Fügebereichs erreicht wird,
wobei
innerhalb des Fügebereichs ein zumindest nahezu homogenes Temperaturfeld eingehalten wird
und
zur Herstellung einer stoffschlüssigen oder stoff- und formschlüssigen Verbindung eine plastische Verformung des thermoplastischen Polymers erfolgt
oder
zum Trennen einer stoffschlüssigen oder stoff- und formschlüssigen Verbindung nach dem Erreichen einer Temperatur des thermoplastischen Polymers, die oberhalb der Erweichungstemperatur liegt, Zugkräfte an metallischen oder keramischen Bauelementen (1) wirken, die mittels einer Bewegung des Druckstempels (3) und des Gegenhalters (4) ausgeübt werden.

8. Verfahren nach dem vorhergehenden Anspruch, **dadurch gekennzeichnet, dass** im Anschluss an die plastische Verformung des polymeren Werkstoffs eine Abkühlung durch Zufuhr eines Kühlmediums oder mit einem Kühlelement durchgeführt wird.

9. Verfahren nach einem der beiden vorhergehenden Ansprüche, **dadurch gekennzeichnet, dass** mittels eines Kraft- und/oder Wegsensors eine Beeinflussung der Heizeinrichtung (6) und/oder Bewegung des Druckstempels (3) und/oder Gegenhalters (4) beim Zusammenpressen der Bauelemente (1 und 2) durchgeführt wird.

10. Verfahren nach einem der drei vorhergehenden Ansprüche, **dadurch gekennzeichnet, dass** mit den elektrischen Widerstandsheizelementen Heizrate größer 500 K/s erreicht wird.

11. Verfahren nach einem der vier vorhergehenden Ansprüche, **dadurch gekennzeichnet, dass** erweichtes oder geschmolzenes Polymer in mindestens eine Vertiefung oder Durchbrechung, die in einem metallischen oder keramischen Bauelement (1) innerhalb des Fügebereichs vorhanden ist oder eine Erhebung in das erweichte oder geschmolzene Polymer eindringt, und für eine formschlüssige Verbindung nutzbar ist/sind.

## Claims

1. An apparatus for establishing a connection having material continuity or having material continuity and shape matching or for separating such a connection of at least one metal or ceramic component (1) and of a component (2) formed from or by a thermoplastic polymer, with which the components (1 and 2) to be joined together can be pressed together by a pressing device having a counterholder (4) and a plunger (3); and
with which a heating device (6) is present at the plunger (3) and/or at the counterholder (4) or acts there, with which heating device (6) a heating of the at least one metal or ceramic component (1) up to above the softening temperature of the component (2) formed from or by the polymer can be achieved, wherein
the heating device (6) is formed by at least one electrical resistance heating element that is covered by an electrically insulating protective film,
and/or
having at least one laser beam that is directed to the metal component(s) (1) within the joining region;
and/or
having at least one inductor present at the plunger (3) and/or at the counterholder (4) for the inductive heating of the metal component(s) (1,2).
**characterized in that**
a locally defined heating of the metal or ceramic component(s) (1) in the joining region can be achieved by the heating device (6) **in that** a plurality of electrical resistance heating elements are each individually controllable and in so doing are configured in the form of dot-shaped, linear, rectangular and/or circular ring segment-shaped electrical resistance heating elements with which an at least almost homogeneous temperature field within the joining region can be achieved;
and/or
the at least one laser beam can be deflected and/or operated in dependence on a temperature measurement device detecting with spatial resolution such that an at least almost homogeneous temperature field can be reached in the joining region;
and/or the at least one inductor is designed as operable in a movable or regulable manner with respect to the metal component (1) so that an at least almost homogeneous temperature field can be achieved in the joining region.

2. An apparatus in accordance with one of the preceding claims, **characterized in that** fixing elements or clamping elements which engage at metal or ceramic components (1) are present at the plunger (3) and the counterholder (4) for separating the connection having material continuity or having material continuity and shape matching and by which tensile forces act on the metal or ceramic components (1) on a moving apart of the plunger (3) and of the counterholder (4).

3. An apparatus in accordance with one of the preceding claims, **characterized in that** at least one aperture and/or one recess into which the softened or melted polymer enters or an elevation that penetrates into the softened or melted polymer is present in a metal or ceramic component (1) within the joining region and can be used for a shape matched connection.

4. An apparatus in accordance with one of the preceding claims, **characterized in that** the at least one laser beam can be operated in a regulable manner in dependence on the temperatures in its feed movement direction measured or known with spatial resolution at the metal component(s) (1) within the joining region, in dependence on the feed speed of the spot of the laser beam, on the size of the area of the spot, on its performance and/or on the pulse rate and pulse length in a pulsed operation of the laser beam so that an at least almost constant temperature field of the respective irradiated metal component (1) is maintained in the joining region and the temperature is maintained above the softening temperature and below the decomposition temperature.

5. An apparatus in accordance with one of the preceding claims, **characterized in that** at least one sensor is present that is preferably formed for the spatially resolved determination of temperatures within the joining region.

6. An apparatus in accordance of one of the preceding claims, **characterized in that** the resistive heating elements are covered by a ceramic protective layer.

7. A method of establishing or of separating a connection having material continuity or having material continuity and shape matching of at least one metal or ceramic components (1) and of a component (2) formed from or by a thermoplastic polymer in which the components (1 and 2) are pressed together by a pressing device having a counterholder (4) and a plunger (3), with a heating of the polymer taking place at least during the pressing together by at least one heating device (6) that is present at the plunger (3) and/or at the counterholder (4) and with a heating of the at least one metal or ceramic component (1) taking place here up to above the softening temperature and below the decomposition temperature of the component (2) formed from or by polymer within a joining region, wherein
the heating device (6) that is formed by electrical resistance heating elements which are covered by an electrical insulating protective film are operated in a controlled or regulated manner if, on the one hand, the heating behavior is known and has preferably been determined in advance or if a spatially resolved detection of the temperature within the joining region is carried out on the heating;
and/or
in a further alternative in which the heating is carried out within the joining region in a regulated or controlled manner by at least one laser beam on the metal or ceramic component(s) (1) by an influencing of the deflection movement of the laser beam, of its beam shape, and/or of the energy that can be coupled in a locally defined manner into the material of the metal component within the joining region;
and/or
in a third alternative, the required heating is carried out with at least one inductor that is present at the plunger (3) and/or at the counterholder (4) and that is configured for the inductive heating of the metal component(s) (1) and in so doing a regulation or control is performed by which a locally defined heating is achieved within the joining region;
wherein within the joining region an almost homogenous temperature field can be achieved
and
a plastic deformation of the thermoplastic polymer takes place to establish a connection having material continuity or having material continuity and shape matching;
or
tensile forces act at metal or ceramic components (1) that are exerted by means of a movement of the plunger (3) and of the counterholder (4) to separate a connection having material continuity or having material continuity and shape matching after the reaching of a temperature of the thermoplastic polymer that is above the softening temperature.

8. A method in accordance with the preceding claim, **characterized in that** a cooling is carried out by supplying a cooling medium or using a cooling element subsequent to the plastic deformation of the polymer material.

9. A method in accordance with one of the two preceding claims, **characterized in that** an influencing of the heating device (6) and/or a movement of the plunger (3) and/or of the counterholder (4) is/are carried out on the pressing together of the components (1 and 2) by means of a force sensor and/or path sensor.

10. A method in accordance with one of the three preceding claims, **characterized in that** a heating rate of more than 500 K/s can be achieved.

11. A method in accordance with one of the four preceding claims, **characterized in that** softened or molten polymer penetrates into at least one recess or aperture present in a metallic or ceramic component (1) within the joining area, or an elevation in the softened or molten polymer penetrates into the recess or aperture, and a shape matching connection is/are usable.

## Revendications

1. Dispositif pour l'établissement d'une liaison de matière ou de matière et par complémentarité de formes ou pour la rupture d'une telle liaison d'au moins un composant (1) métallique ou céramique et d'un composant (2) formé à partir de ou avec un polymère thermoplastique, pour lequel les composants (1 et 2) à assembler l'un à l'autre peuvent être pressés l'un contre l'autre avec un système de pressage présentant un contre-support (4) et un poinçon de pression (3) et
un système de chauffage (6) est présent sur le poinçon de pression (3) et/ou le contre-support (4) ou agit à cet endroit, avec lequel un chauffage de l'au moins un composant (1) métallique ou céramique jusqu'à une température supérieure à la température de ramollissement du composant (2) formé à partir de ou avec un polymère peut être obtenu ; dans lequel
le système de chauffage (6) est formé avec des éléments de chauffage par résistance électriques, qui sont recouverts d'une couche protectrice électriquement isolante, et/ou
avec au moins un faisceau laser, qui est dirigé sur le/les composants (1) métallique(s) à l'intérieur de la zone d'assemblage, et/ou
avec au moins un inducteur présent sur le poinçon de pression (3) et/ou le contre-support (4) pour le chauffage par induction d'un du/des composant(s) (1, 2) métalliques,
**caractérisé en ce qu'**avec le système de chauffage (6) il est possible d'obtenir un chauffage défini localement du/des composant(s) (1) métallique(s) ou céramique(s) dans la zone d'assemblage ; du fait que plusieurs éléments de chauffage par résistance électriques peuvent être commandés respectivement individuellement et sont réalisés sous la forme d'éléments de chauffage par résistance électriques en forme de points, de lignes, de rectangles et/ou de segments d'anneau circulaire et
un champ de température au moins presque homogène peut être obtenu à l'intérieur de la zone d'assemblage,
et/ou
le au moins un faisceau laser peut être dévié et/ou peut être actionné en fonction d'un système de mesure de température effectuant une détection avec une résolution locale, de telle sorte qu'un champ de température au moins presque homogène peut être obtenu dans la zone d'assemblage,
et/ou le au moins un inducteur est conçu de manière à pouvoir être déplacé ou actionné de manière réglable par rapport au composant (1) métallique, de sorte qu'un champ de température au moins presque homogène peut être obtenu dans la zone d'assemblage.

2. Dispositif selon la revendication 1, **caractérisé en ce que** pour la rupture de la liaison de matière ou de matière et par complémentarité de formes, des éléments de fixation ou de serrage, qui agissent sur les composants (1) métalliques ou céramiques, sont présents sur le poinçon de pression (3) et le contre-support (4), avec lesquels des forces de traction agissent sur les composants (1) métalliques ou céramiques lors d'un mouvement d'écartement du poinçon de pression (3) et du contre-support (4).

3. Dispositif selon l'une quelconque des revendications précédentes, **caractérisé en ce qu'**au moins une ouverture et/ou un creux dans lequel parvient le polymère ramolli ou fondu ou une bosse, qui pénètre dans le polymère ramolli ou fondu, sont présents dans un composant (1) métallique ou céramique à l'intérieur de la zone d'assemblage, qui est/sont utilisable(s) pour une liaison par complémentarité de formes.

4. Dispositif selon l'une quelconque des revendications précédentes, **caractérisé en ce que** le au moins un faisceau laser peut être actionné de manière réglable en fonction des températures mesurées ou connues avec une résolution locale à l'intérieur de la zone d'assemblage sur le/les composant(s) (1) métallique(s) dans sa direction de mouvement d'avance, de la vitesse d'avance de la tache focale du faisceau laser, de la taille de la surface de la tache focale, de sa puissance et/ou du taux d'impulsions et de la longueur d'impulsion lors d'un fonctionnement pulsé du faisceau laser, de sorte qu'un champ de température au moins presque constant du composant (1) métallique respectif irradié est respecté dans la zone d'assemblage et la température est maintenue au-dessus de la température de ramollissement et au-dessous de la température de décomposition du polymère.

5. Dispositif selon l'une quelconque des revendications précédentes, **caractérisé en ce qu'**au moins un capteur, qui est de préférence réalisé pour la détermination avec une résolution locale de températures à l'intérieur de la zone d'assemblage, est présent.

6. Dispositif selon l'une quelconque des revendications précédentes, **caractérisé en ce que** les éléments de chauffage par résistance sont recouverts d'une couche protectrice céramique.

7. Procédé pour la fabrication ou la rupture d'une liaison de matière ou de matière et par complémentarité de formes d'au moins un composant (1) métallique ou céramique et d'un composant (2) formé à partir ou avec un polymère thermoplastique, au moyen d'un dispositif selon l'une quelconque des revendications précédentes, les composants (1 et 2) sont pressés l'un contre l'autre avec un système de pressage présentant un contre-support (4) et un poinçon de pression (3), un chauffage du polymère s'effectue au moins pendant le pressage avec au moins un système de chauffage (6) présent sur le poinçon de pression (3) et/ou le contre-support (4), de l'au moins un composant (1) métallique ou céramique jusqu'à une température supérieure à la température de ramollissement et inférieure à la température de décomposition du composant (2) formé à partir de ou avec du polymère à l'intérieur d'une zone d'assemblage, dans lequel le système de chauffage (6) réalisé avec des éléments de chauffage par résistance électriques, qui sont recouverts d'une couche protectrice électriquement isolante, est actionné de manière commandée ou réglée, une fois que le comportement de chauffage est connu et de préférence a été déterminé au préalable ou lors du chauffage une détection avec une résolution locale de la température est mise en œuvre à l'intérieur de la zone d'assemblage
et/ou
dans une autre variante pour laquelle le chauffage à l'intérieur de la zone d'assemblage est mis en œuvre sous forme réglée ou commandée avec au moins un faisceau laser, qui sur le/les composant(s) (1) métallique(s) ou céramique(s) par une influence du mouvement de déviation du faisceau laser, de sa formation de faisceau et/ou l'énergie qui peut être injectée de manière définie localement à l'intérieur de la zone d'assemblage dans le matériau du composant métallique
et/ou
dans une troisième variante, le chauffage nécessaire est mis en œuvre avec au moins un inducteur présent sur le poinçon de pression (3) et/ou le contre-support (4), qui est réalisé pour le chauffage inductif du/des composant(s) (1) métallique(s), et un réglage ou une commande, avec lequel/laquelle un chauffage défini localement à l'intérieur de la zone d'assemblage est obtenu,
dans lequel
un champ de température au moins presque homogène est respecté à l'intérieur de la zone d'assemblage
et une déformation plastique du polymère thermoplastique s'effectue pour l'établissement d'une liaison de matière ou de matière et par complémentarité de formes
ou pour la rupture d'une liaison de matière ou de matière et par complémentarité de formes, après avoir atteint une température du polymère thermoplastique qui est supérieure à la température de ramollissement, des forces de traction agissent sur les composants (1) métalliques ou céramiques, qui sont exercées au moyen d'un mouvement du poinçon de pression (3) et du contre-support (4).

8. Procédé selon la revendication précédente, **caractérisé en ce qu'**à la suite de la déformation plastique du matériau polymère un refroidissement est mis en œuvre par amenée d'un milieu de refroidissement ou avec un élément de refroidissement.

9. Procédé selon l'une des deux revendications précédentes, **caractérisé en ce qu'**une influence sur le système de chauffage (6) et/ou mouvement du poinçon de pression (3) et/ou contre-support (4) est mise en œuvre au moyen d'un capteur de force et/ou de déplacement lors du pressage des composants (1 et 2) l'un contre l'autre.

10. Procédé selon l'une des trois revendications précédentes, **caractérisé en ce qu'**une vitesse de chauffage supérieure à 500 K/s est atteinte avec les éléments de chauffage par résistance électriques.

11. Procédé selon l'une quelconque des quatre revendications précédentes, **caractérisé en ce que** le polymère ramolli ou fondu pénètre dans au moins un creux ou une ouverture, qui est présent(e) dans un composant (1) métallique ou céramique à l'intérieur de la zone d'assemblage ou une bosse dans le polymère ramolli ou fondu, et peut/peuvent être utilisé(s) pour une liaison par complémentarité de formes.
